# EUROPEAN PATENT SPECIFICATION

(11) **EP 0 863 181 B1**
(45) Date of publication and mention of the grant of the patent: **31.05.2006**
(21) Application number: 98103671.8
(22) Date of filing: 03.03.1998
(51) Int. Cl.: C08K 13/08, C08L 101/00, C08J 5/18, B32B 27/06, B32B 27/18, B65D 81/00, C08K 3/04, C08K 3/22, C08K 11/00

(54) **Deoxidizing resin composition sheet or film comprising same, and packaging container**
Desoxidierende Harzzusammensetzung, Folie oder Film die diese enthalten und Verpackungsbehälter
Composition de résine désoxydante, feuille ou film comprenant celle-ci et récipient d'emballage

(30) Priority: 06.03.1997 JP 5162897
(43) Date of publication of application: 09.09.1998
(73) Proprietor: MITSUBISHI GAS CHEMICAL COMPANY, INC., Chiyoda-ku, Tokyo (JP)
(72) Inventor: Kashiba, Takashi, Mitsubishi Gas Chem. Comp. Inc., Hiratsuka-shi, Kanagawa-ken (JP); Otaki, Ryoji, c/o Mitsubishi Gas Chem. Comp. Inc., Hiratsuka-shi, Kanagawa-ken (JP); Ito, Yoshiki, c/o Mitsubishi Gas Chem. Comp. Inc., Hiratsuka-shi, Kanagawa-ken (JP)
(74) Representative: Gille Hrabal Struck Neidlein Prop Roos

(56) References cited:
- DATABASE WPI Section Ch, Week 8226 Derwent Publications Ltd., London, GB; Class D13, AN 82-53058E XP002070009 & JP 57 079 869 A (MITSUBISHI GAS CHEM IND CO LTD)
- DATABASE WPI Section Ch, Week 8009 Derwent Publications Ltd., London, GB; Class A92, AN 80-15338C XP002070010 & JP 55 007 020 A (MITSUBISHI GAS CHEM IND CO LTD)

## Description

### BACKGROUND OF THE INVENTION

### 1. Field of the Invention

The present invention relates to a deoxidizing resin composition which is excellent in resin workability and aroma holding properties and which does not emit any odor. More specifically, it relates to a deoxidizing resin composition which is characterized by being obtained by adding a deoxidizer which can bring about an oxygen absorbing reaction at its contact with water, an active carbon and an oxide of an alkaline earth metal to a thermoplastic resin. Furthermore, the present invention relates to a single-layer or a multi-layer sheet or film comprising the above-mentioned deoxidizing resin composition, and a packaging container.

### 2. Description of the Related Art

In recent years, by one of deoxidizing package techniques, there have been developed packaging containers comprising a multi-layer material having a deoxidizing resin layer in which a deoxidizer is blended, and these containers intend to improve barrier properties and to impart a deoxidizing function to themselves. The packaging containers having the deoxidizing function are made of a deoxidizing multi-layer material which comprises a deoxidizing resin layer as a middle layer in which a deoxidizer is blended, a gas barrier outer layer formed outside the middle layer, and an oxygen permeating inner layer formed inside the middle layer, but sheet-like and film-like deoxidizing multi-layer materials have been developed as multi-layer resin layer laminates which can easily be molded and worked into containers such as bags, cups, trays and bottles. As the deoxidizing multi-layer materials, there can be utilized multi-layer films and sheets containing a layer formed by dispersing a deoxidizer in a resin, which are disclosed in, for example, Japanese Patent Publication No. 51397/1994, Japanese Patent Application Laid-open Nos. 72851/1990, 309323/1995 and 72941/1996. However, these conventional techniques can absorb and remove oxygen in the container to maintain a oxygen-free state in the container, but it has a drawback that the aroma and the taste of a preserved material is deteriorated by an odor component emitted during the oxidation reaction of a deoxidizer component in the resin.

In order to solve the problem of the odor, it is well known to use an adsorbent for absorbing the odor component. For example, Japanese Patent Application Laid-open No. 247276/1993 has suggested an oxygen barrier resin composition containing an oxidizing catalyst and an adsorbent for the purpose of deodorization, and Japanese Patent Application Laid-open No. 67594/1995 has suggested a multi-layer container in which an adsorbent having a certain or more specific surface area is contained in a deoxidizing resin layer and another multi-layer container in which one layer containing the adsorbent is formed on the inside of the deoxidizing resin layer, in order to prevent the generation of a bad taste and an odor in the deoxidizing multi-layer container. In these conventional techniques, a zeolite, a silica gel, an active carbon, a diatomaceous earth and the like which are well known as the adsorbents have been used. However, all of these adsorbents are not always effective, and the adsorbents which easily absorb water are liable to cause various troubles owing to water held in the adsorbents during the work of a resin, so that the good workability cannot be obtained.

In general, it is well known to use the active carbon for the absorption and removal of the odor, but the active carbon which is excellent in an adsorption performance easily adsorbs water in the air, so that the active carbon usually holds 1% or more of water. When the active carbon holding water is added to a resin containing the deoxidizer and the resin is thermoformed into single-layer or multi-layer sheets or films or containers, water held in the active carbon gives rise to foaming in the resin, and for this reason, the products having a good appearance cannot stably be obtained, and the work itself of the resin is impossible sometimes. Therefore, the active carbon having the excellent deodorization performance, if stored in the air, is required to be subjected to a drying treatment prior to its use, and on the other hand, the active carbon in a dry state is required to be protected from moisture until its use, which is troublesome. Even if the dry active carbon having a low water content can be used and the work can be achieved without any problem, the obtained sheets or films absorb water when stored in the air, and in the case that they are secondarily worked into containers or the like, the surfaces of the containers becomes rough owing to the foaming, which causes a problem that the surface smoothness of the secondarily worked articles is impaired. Furthermore, as for the active carbon which scarcely absorb water in the air, there is no problem of the resin work, but its adsorption performance is low and the addition of such an active carbon is meaningless. As understood from the foregoing, when the active carbon is singly added to the resin containing the deoxidizer, it is difficult to prepare a deoxidizing resin composition which is excellent in aroma holding properties and workability.

As described above, it has been desired to develop a novel deoxidizing resin composition in which even if the active carbon holding water is added thereto, the foaming does not occur during the thermoforming and which has the good workability and aroma holding properties and which can easily be thermoformed into single-layer or multi-layer sheets or films, containers, or the like having a good appearance and which can exert a function of adsorbing the components of a bad taste and an odor which the active carbon has.

### SUMMARY OF THE INVENTION

The present inventors have intensively researched with the intention of solving the above-mentioned problems, and as a result, it has been found that the above-mentioned problems can be solved by blending an active carbon and an alkaline earth metal oxide with a resin composition prepared by adding a deoxidizer which can bring about an oxygen absorbing reaction by its contact with water to a thermoplastic resin. In consequence, the present invention has been completed.

That is to say, an object of the present invention is to provide a deoxidizing resin composition which is excellent in aroma holding properties and resin workability, and the first aspect of the present invention is directed to a deoxidizing resin composition in which a deoxidizer which can bring about an oxygen absorbing reaction by its contact with water, an active carbon, and an alkaline earth metal oxide are contained in a thermoplastic resin.

Here, in the deoxidizing resin composition of the present invention, it is preferable that the content of the deoxidizer is in the range of 10 to 80% by weight based on the weight of the deoxidizing resin composition, the content of the active carbon is in the range of 0.1 to 10 parts by weight based on 100 parts by weight of the deoxidizer, and the content of the alkaline earth metal oxide is in the range of 0.1 to 10 parts by weight based on 100 parts by weight of the deoxidizer.

The second aspect of the present invention is directed to a deoxidizing sheet or a film comprising the above-mentioned deoxidizing resin composition.

The third aspect of the present invention is directed to a deoxidizing multi-layer material in which isolate layers are formed on both the surfaces of a deoxidizing resin layer comprising the deoxidizing resin composition, and at least one of these isolate layers is in a breathing state.

The fourth aspect of the present invention is directed to a packaging container a part or all of which comprises the deoxidizing multi-layer material so as to absorb oxygen in the container.

According to the present invention, the deoxidizing resin composition of the present invention is constituted so as to have the above-mentioned composition, and therefore, even if the active carbon holding water is used, the coexistent alkaline earth metal oxide absorbs and removes water, so that any foaming does not occur during the thermoforming of the deoxidizing resin composition, which means that the resin composition is excellent in workability. Accordingly, the deoxidizing resin composition regarding the present invention can easily be worked into single-layer or multi-layer sheets or films, containers or the like having a smooth surface and a good appearance. Moreover, when the multi-layer sheets or films regarding the present invention are thermoformed into the containers or the like, any foam is not generated, so that the surfaces of the containers are not roughed and hence the appearance of the containers is not impaired. Thus, the function of adsorbing the components of a bad taste and an odor which active carbon has can be exerted, whereby the deoxidizing resin composition having the excellent aroma holding properties can be established.

### BRIEF DESCRIPTION OF THE DRAWINGS

Fig. 1 is a sectional view of one embodiment (one side absorption type) of a deoxidizing multi-layer material according to the present invention.
Fig. 2 is a sectional view of one embodiment (both sides absorption type) of a deoxidizing multi-layer material according to the present invention.

In these drawings, reference numeral 1 is a gas barrier isolate layer, numeral 2 is a deoxidizing resin layer, 3 is a breathing isolate layer, 3' is a breathing isolate layer, 13 is an adhesive layer, 14 is a gas barrier layer, 15 is an adhesive layer, and 16 is a reinforcing layer.

### DETAILED DESCRIPTION OF THE INVENTION

A deoxidizer which can be used in the present invention can bring about an oxygen absorbing reaction by its contact with water and can be dispersed in a thermoplastic resin. In addition, the deoxidizer preferably contains metallic iron as a main agent for the oxygen absorbing reaction, and more preferably, it contains metallic iron and a metal halide. Most preferably, it contains iron power on which the metal halide is deposited.

As metallic iron which is used as the main agent in the deoxidizer, any iron can be used irrespective of its purity and the like, so long as it can bring about the oxygen absorbing reaction, and for example, the surface of metallic ion may partially be oxidized and it may contain another metal. Metallic iron is preferably particulate or fibrous, and examples of usable metallic iron include iron powders such as a reducing iron powder, a spray iron powder and an electrolyzed iron powder, and ground and pulverized materials of various irons such as cast iron and steel. In order to permit the formation of the thin oxygen absorbing resin layer, the fine iron powder is preferable, and the average particle diameter of the iron powder is preferably 200 µm or less, more preferably in the range of 1 to 50 µm.

Examples of the preferably usable metal halide include chlorides, bromides and iodides of alkali metals and alkaline earth metals, and the chlorides of lithium, sodium, potassium, magnesium, calcium and barium are particularly preferable. The amount of the metal halide to be blended is in the range of 0.1 to 20 parts by weight, more preferably 0.1 to 5 parts by weight, with respect to 100 parts by weight of the metal. The metal halide functions as a catalyst in the oxygen absorbing reaction of the main agent, and when the metal halide is deposited on the iron powder, the amount of the metal halide to be blended can be decreased.

The above-mentioned metal halide can be added to the resin as one component of the deoxidizer together with metallic iron, but it is preferable that prior to the addition, the metal halide is previously mixed with metallic iron so that the metal halide may adhere to the metal in the resin, whereby the metal halide is not easily separated from the metal. For example, there can be employed a method in which the metal halide and the iron powder are mixed by the use of a ball mill or a speed mill, a method in which the metal halide is filled into recesses on the surfaces of the iron powder, a method in which the metal halide is deposited on the surfaces of the iron powder by the use of a binder, or a method which comprises mixing an aqueous metal halide solution with the iron powder, drying the mixture, and then depositing the dry mixture on the surfaces of the iron powder.

In the present invention, the alkaline earth metal oxide can be used as the adsorbent for water held in the active carbon which is added to the deoxidizing resin composition, whereby the excellent performances of aroma holding properties, the workability and the like can be achieved. However, by the use of silica gel and zeolites which are the known water adsorbents, the achievement of such excellent performances is difficult. That is to say, a temperature at which the resin composition is molten and molded is usually 90°C or more, but water adsorbents such as the silica gel and the zeolite release adsorbed water at a temperature of 90°C or more at which the resin is worked, and the thus released water foams in the resin composition, which deteriorates the appearance of molded articles. On the other hand, in the case that the alkaline earth metal oxide is used as in the present invention, even if water is adsorbed, the adsorbed water is not released so long as a temperature of 350°C or more is not reached. Therefore, the present invention has an advantage that such a problem does not take place.

Examples of the alkaline earth metal oxide include magnesium oxide, calcium oxide, strontium oxide and barium oxide, but above all, magnesium oxide and calcium oxide are particularly preferable from the viewpoint of reactivity. The particle size of the alkaline earth metal oxide is preferably in the range of 1 to 200 µm, more preferably 1 to 50 µm. The particle diameter of the alkaline earth metal oxide is preferably equal to or less than that of the deoxidizer.

The larger the specific surface area of the active carbon is, the higher the adsorbing performance of the active carbon is. Thus, the specific surface area of the active carbon is preferably 100 m²/g (a BET method) or more, particularly preferably 500 m²/g or more. The active carbon having the excellent adsorbing performance can easily absorb water, and it is preferable to use the active carbon which can adsorb 1% or more of water when it is stored at 23°C and at a relative humidity (RH) of 60% or less. The adsorbing performance of the active carbon can usually be estimated by a methylene blue decoloring power and a caramel decoloring power, but in order to efficiently adsorb the components of the bad taste and the odor, it is preferable that both of the methylene blue decoloring power and the caramel decoloring power are simultaneously high. In the present invention, the active carbon having a caramel decoloring power of 90% or more [JIS (Japanese Industrial Standard) K1470] and a methylene blue decoloring power of 150 ml/g or more (JIS K1470) can preferably be used.

The active carbon made of a raw material such as coconut shells, a wood or a coal can be used. No particular restriction is put on the preparation method of the active carbon, but the active carbon obtained by a method such as a water vapor activation method or a zinc chloride activation method can preferably be used. The particle diameter of the active carbon is equal to or less than that of the deoxidizer, and the average particle diameter of the active carbon is preferably in the range of 1 to 200 µm, more preferably 1 to 50 µm. The active carbon can be classified into a dry carbon and a wet carbon in which water is previously contained, but in the present invention, the dry carbon having a water content of 10% (JIS K1470) or less can preferably be used. When the water content of the active carbon is high, a larger amount of the alkaline earth metal oxide is required, and for this reason, the active carbon containing much water is not preferable.

The resin which can be used in the deoxidizing resin composition, i.e., the thermoplastic resin containing the deoxidizer, the active carbon and the alkaline earth metal oxide preferably has an oxygen permeability constant of 200 cc•0.1 mm/m²•atm•day (23°C, RH = 60%) or more, and examples of the thermoplastic resin include polyolefins such as polyethylene, polypropylene, propylene-ethylene random copolymer, propylene-ethylene block copolymer, polybutadiene and polymethylpentene, elastomers and modified substances thereof, graft polymers with silicone resins, and mixtures thereof. Among these resins, polyethylene, polypropylene, a mixture of polyethylene and polypropylene, propylene-ethylene random copolymer, propylene-ethylene block copolymer, elastomers and mixtures thereof are preferable.

A deoxidizer content in the deoxidizing resin composition is usually in the range of 2 to 93% by weight, preferably 10 to 80% by weight, based on the weight of the deoxidizing resin composition. If the deoxidizer content is less than the above-mentioned range, a sufficient oxygen absorbing performance cannot be obtained, and if it is too high, the mechanical strength and the moldability of the resin composition are poor. The content of the active carbon in the deoxidizing resin composition is preferably in the range of 0.1 to 10 parts by weight with respect to 100 parts by weight of the deoxidizer. If the content of the active carbon is less than the above-mentioned range, the sufficient aroma holding properties cannot be obtained, and if it is too high, the mechanical strength and the moldability of the resin composition are poor. Moreover, the content of the alkaline earth metal oxide is preferably in the range of 0.1 to 10 parts by weight with respect to 100 parts by weight of the deoxidizer. If the mount of the alkaline earth metal is less than the above-mentioned range, a sufficient water removal effect cannot be obtained, and if it is too large, even water which is required for the deoxidizing reaction is adsorbed, so that the oxygen absorbing reaction of the deoxidizing resin composition is inconveniently hindered.

Furthermore, some additives can be added to the deoxidizing resin composition, if necessary, and examples of the additives include colorants such as organic and inorganic dyes and pigments, dispersants such as silane compounds and titanate compounds, water absorbents such as polyacrylic acid compounds, and fillers such as clay, silica and starch.

The above-mentioned deoxidizing resin composition can be worked into the single-layer sheets or films, which can be used as the deoxidizer. Furthermore, the deoxidizing resin composition of the present invention can be formed into the deoxidizing multi-layer sheets or films.

In the deoxidizing multi-layer material regarding the present invention, the deoxidizing resin layer comprising the deoxidizing resin composition can be used as an intermediate layer, and at least one layer of the isolate layers laminated on both the sides of this intermediate layer is the breathing isolate layer, and the deoxidizing multi-layer material can take a laminate structure suitable for a use purpose. Concretely, on one surface of the deoxidizing resin layer, the breathing isolate layer can be formed, and on the other surface thereof, the gas barrier isolate layer can be formed (one surface absorption type). Alternatively, on both the surfaces of the deoxidizing resin layer, the non-barrier layers can be formed (both surfaces absorption type). The thickness of the deoxidizing resin layer in the deoxidizing multi-layer material is preferably 1000 µm or less, more preferably 500 µm or less.

The resin which can be used for the breathing isolate layer is preferably a thermoplastic resin, and examples of the thermoplastic resin include polyolefins such as polyethylene, polypropylene, propylene-ethylene random copolymer, propylene-ethylene block copolymer, polybutadiene and polymethylpentene, elastomers and modified substances thereof, graft polymers with silicone resins, and mixtures thereof. Among these resins, polyethylene, polypropylene, propylene-ethylene random copolymer, propylene-ethylene block copolymer, elastomers and mixtures thereof are preferable.

The breathing isolate layer often plays the role of a sealant layer as a innermost layer in the case that the multi-layer material of the present invention is molded into packaging containers, and it is preferable that as the thermoplastic resin, a heat-sealable resin is selected. Alternatively, the heat-sealable resin may further be formed on an outermost surface of the breathing isolate layer. If necessary, the heat-seal layer which is the outermost layer of the breathing isolate layer can be blended with additives such as a colorant such as a pigment, a filler, an antistatic agent and/or a stabilizer.

The above-mentioned breathing isolate layer plays a role of an isolate layer of the oxygen absorbing layer comprising the deoxidizing resin composition and has a function of promptly and efficiently allowing oxygen to permeate therethrough. The oxygen permeability of the breathing isolate layer is preferably at least 100 cc•0.1 mm/m²·atm·day (23°C, RH = 60%) irrespective of the constitution and the thickness of the breathing isolate layer. Therefore, the thickness of the breathing isolate layer is preferably as thin as possible within a range in which the strength, the workability, the cost and the like are allowable, in order to increase the oxygen permeability. Moreover, the breathing isolate layer is not always a hole-free resin layer, and it may be a breathing film having many fine holes or a nonwoven fabric.

The gas barrier isolate layer is positioned on the outside of the oxygen absorbing layer in the case that the multi-layer material of the present invention is molded into a packaging container, and its oxygen permeability is preferably 50 cc•0.1 mm/m²•atm•day (23°C, RH = 60%) or less. As the gas barrier isolate layer, there can be used a thermoplastic resin having a low oxygen permeability such as a polyester, a polyamide, an ethylene-vinyl alcohol copolymer, a film on which a metal foil of aluminum, tin or the like is deposited, or a film on which aluminum or silica is vapor-deposited. In addition, on the gas barrier isolate layer of the deoxidizing multi-layer material, a reinforcing layer, an adhesive layer and the like can be formed, if necessary, in order to reinforce the strength of the deoxidizing multi-layer material.

For the preparation and the molding of the deoxidizing multi-layer material of the present invention, a known resin molding work technique can be used, and examples of such a technique include sheet molding methods such as multi-layer co-extrusion molding using a T-die and a circular die, vacuum molding and air-pressure forming, multi-layer blow molding methods such as direct blow and stretching blow, an injection molding method such as co-injection, laminating methods such as extrusion laminating, thermal laminating, dry laminating, hotmelt laminating, known converting techniques such as various coating methods, and combinations thereof.

The deoxidizing multi-layer material of the present invention can be used to prepare the packaging containers having the deoxidizing performance of the oxygen absorbing barrier material (one surface absorption type) or the non-barrier material (both surface absorption type). The barrier material can be used for a part or all of an outer material of each of the packaging containers such as films, trays, cups, tubes, bottles or bags, and the barrier material can absorb oxygen coming from the outside of the container as well as oxygen in the container to prevent the quality change of a packed material with oxygen. In addition, the barrier material can be used as members such as lids for the openings of containers such as the trays or the bottles, and top seal films. On the other hand, the non-barrier material can take the form of sheets such as mounts or dividers, and they can be inserted as a part of packaging materials into the sealable containers. In addition, the non-barrier material can be used as containers such as the trays and the bottles, and after a packed material is received therein, they can be wrapped in the gas barrier film or the like and then used.

According to the present invention, the deoxidizing resin composition is blended with the active carbon together with the alkaline earth metal oxide, whereby single-layer or multi-layer sheets and films or containers having an excellent workability can easily be worked, even if the blended active carbon holds water. In particular, the active carbon which is excellent in an adsorption performance and which easily absorb moisture can simply be used without a drying treatment, which merit is large.

In consequence, the deoxidizing resin composition of the present invention is excellent in resin workability, aroma holding properties and a deoxidizing performance and which does not emit any odor, and hence, it can be worked into a deoxidizing packaging material and then utilized in various forms. Thus, it is extremely useful.

Next, the present invention will be described in more detail in accordance with examples and comparative

### examples.

### Example 1

In a vacuum mixing drying machine equipped with a heating jacket was placed 100 kg of a reducing iron powder having an average particle diameter of 30 µm, and 5 kg of a 50 wt% aqueous calcium chloride solution was sprayed thereinto, while the powder was heated at 140°C under a reduced pressure of 10 mmHg. After drying, screening was carried out to remove coarse particles of 100 mesh or more, thereby obtaining a deoxidizer.

Next, ethylene-propylene random copolymer and the above-mentioned deoxidizer were kneaded in a weight ratio of 1:1 by the use of an extruding machine comprising a 45 mmφ one direction rotatable twin-screw extruder equipped with vents and a constant feeder, and the kneaded material was then extruded through a strand die, followed by air cooling and grinding, thereby obtaining a master batch A. Similarly, by the use of the above-mentioned extruding machine, calcium oxide having an average particle diameter of 20 µm and a low-density polyethylene were kneaded in a weight ratio of 1:1 to obtain a master batch B. Similarly, by the use of the above-mentioned extruding machine, a woody active carbon obtained by a water vapor activation method and the above-mentioned master batch B were kneaded in a weight ratio of 1:4, and then extruded to obtain a master batch C. The characteristics of the used woody active carbon were that a water content was 3% (JIS K1470), an average particle diameter was 20 µm, a specific surface area was 1200 m²/g (a BET method), a caramel decoloring power was 95%, and a methylene blue decoloring power was 190 ml/g (JIS K1470), and in this case, the master batch C could successfully be extruded through the strand die. The composition of the obtained master batch C was the low-density polyethylene:the active carbon:calcium oxide = 2:1:2, and it was used as a master batch of a low-density polyethylene base containing 20% by weight of the active carbon and 40% by weight of calcium oxide.

**Table 1**

| Extruder | Resin Composition | Constitutional Layer |
|---|---|---|
| First Extruder | Ethylene-propylene | Layer 3: Breathing |
| | Copolymer 90 wt% | isolate layer |
| | Titanium oxide pigment | |
| | 10 wt% | |
| Second Extruder | Master batch A 95 wt% | Layer 2: Deoxidizing |
| | Master batch C 5 wt% | resin layer |
| Third Extruder | Polyamide MXD6 50 wt% | Layer 14: Gas |
| | Amorphous polyamide | barrier layer |
| | 50 wt% | |
| Fourth Extruder | Maleic anhydride- | Layers 13, 15: |
| | modified polypropylene | Adhesive layers |
| Fifth Extruder | Ethylene-propylene | Layer 16: Reinforc- |
| | Copolymer 95 wt% | ing layer |
| | Titanium oxide pigment | |
| | 5 wt% | |

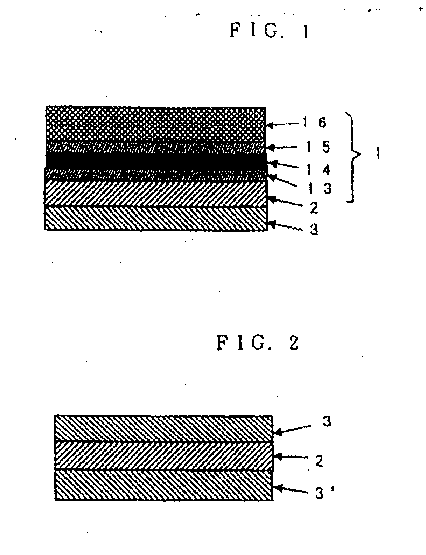

Next, by the use of a 5-kind 6-layer multi-layer sheet molding machine comprising the first extruder to the fifth extruder, a feed block, a T-die, a cooling roll, a take-off unit, a slitter and a winder, resin compositions shown in Table 1 were extruded from the first extruder to the fifth extruder to prepare a deoxidizing multi-layer sheet (width = 650 mm) in which a layer 3, a layer 2, a layer 13, a layer 14, a layer 15 and a layer 16 shown in Fig. 1 were laminated in this order. The composition of the deoxidizing resin layer was the thermoplastic resins (the ethylene-propylene random copolymer and the low-density polyethylene):the deoxidizer:the active carbon:calcium oxide = 49.5:47.5:1:2 (weight ratio). The surface appearance of the obtained multi-layer sheet was smooth and good. The respective layers of this multi-layer sheet play the roles of the layer 3 = a breathing isolate layer (100 µm), the layer 2 = a deoxidizing resin layer (200 µm), the layer 13 = an adhesive layer (20 µm), the layer 14 = a gas barrier layer (40 µm), the layer 15 = an adhesive layer (20 µm), and the layer 16 = a reinforcing layer (320 µm) (the value in each of the parentheses denote a layer thickness). The prepared multi-layer sheet was wound on a vinyl chloride pipe (inner diameter = 3 inches) every unit of 30 m, and this was then wrapped in an aluminum-laminated polypropylene film in a moistureproof state to get ready for the preparation of a tray-like container in Example 2.

### Comparative Example 1

By the use of an extruding machine in Example 1, a woody active carbon (water content = 3%) and a low-density polyethylene used in Example 1 were kneaded in a weight ratio of 1:4 and extrusion was then tried. At this time, however, foaming occurred, so that a good extrusion could not be accomplished through a strand die, with the result that a low-density polyethylene master batch containing the active carbon could not be obtained.

### Reference Example 1

By the use of an extruding machine in Example 1, the above-mentioned woody active carbon (water content = 3%) which was previously dried at 200°C for 2 hours in an electric furnace and the above-mentioned low-density polyethylene were extruded in a weight ratio of 1:4 to obtain a low-density polyethylene master batch D containing 20% of the active carbon. Next, the preparation of a multi-layer sheet was tried by the use of a multi-layer sheet molding machine in Example 1 in accordance with the same procedure as in Example 1 except that the master batch C of the second extruder was replaced with the master batch D. However, according to the observation of the obtained multi-layer sheet, the surface of the sheet was rough, and in other words, it was not smooth, which meant that the appearance of the sheet was poor. Moreover, in the layer 2 (the deoxidizing resin layer), the generation of foaming was observed. The prepared multi-layer sheet was somehow wound every unit of 30 m, and was then wrapped in an aluminum-laminated polypropylene film in a moistureproof state to get ready for the preparation of a tray-like container in Comparative Example 2 which would be described hereinafter.

### Reference Example 2

By the use of a multi-layer molding machine in Example 1, a multi-layer sheet was prepared in accordance with the same procedure as in Example 1 except that among compositions extruded through the second extruder, a master batch C was replaced with 4% by weight of a master batch B and 1% by weight of ethylene-propylene random copolymer. The thus obtained multi-layer sheet had a smooth surface and hence a good appearance. The prepared multi-layer sheet was wound every unit of 30 m, and was then wrapped in an aluminum-laminated polypropylene film in a moistureproof state to get ready for the preparation of a tray-like container in Comparative Example 3 which would be described hereinafter.

### Reference Example 3

By the use of an extruding machine in Example 1, a master batch E was obtained, an active carbon in a master batch C being replaced with a calcined diatomaceous earth (water content = 0.3% by weight). The composition of the master batch E was the calcined diatomaceous earth:calcium oxide:a low-density polyethylene = 1:2:2 in a weight ratio. Next, by the use of a multi-layer sheet molding machine in Example 1, a multi-layer sheet was prepared by the same procedure as in Example 1 except that among of compositions extruded through the second extruder, the master batch C was replaced with the master batch E. The obtained multi-layer sheet had a smooth surface and hence a good appearance. The prepared multi-layer sheet was wound every unit of 30 m, and was then wrapped in an aluminum-laminated polypropylene film in a moistureproof state to get ready for the preparation of a tray-like container in Comparative Example 4 which would be described hereinafter.

### Example 2

A package of a rolled deoxidizing multi-layer sheet prepared in Example 1 was opened after 2 months, and this multi-layer sheet was molded into a tray-like container (length 130 mm × width 90 mm × depth 25 mm, internal volume = 250 cc) at a temperature of 170°C by the use of a vacuum molding machine. The molding state of the obtained tray-like container was extremely good. Next, 200 g of rice with red beans was filled into this tray-like container, and a top film comprising a polyester, an aluminum foil and a polypropylene was used as a container opening portion and then heat-sealed to seal the container. The tray-like container in which the rice with red beans was sealed was subjected to a retort treatment at 120°C for 30 minutes, and it was then stored at 25°C. After the storage for 2 months, the top film was peeled from the container, and heating was then made for 2 minutes in a microwave oven, and the flavor of the rice was inspected. In this connection, an oxygen concentration in the sealed container was measured every day during a storage period. The results are shown in Table 2.

### Comparative Example 2

As in Example 2, a package of a rolled deoxidizing multi-layer sheet prepared in Reference Example 1 was opened after 2 months, and the multi-layer sheet was then molded into a tray-like container. However, with regard to the obtained tray, foaming occurred in the multi-layer sheet, so that the appearance of the inside surface of the tray was impaired, and in addition, a breathing isolate layer (a layer 3) was partially broken, so that a deoxidizing resin layer (a layer 2) was exposed. Hence, the tray was useless.

### Comparative Example 3

As in Example 2, a package of a rolled multi-layer sheet prepared in Reference Example 2 was opened after 2 months, and the multi-layer sheet was then molded into a tray-like container. The molding state of the obtained tray-like container was extremely good. This tray-like container was used to carry out a storage test of rice with red beans in the same manner as in Example 2. The results are shown in Table 2.

### Comparative Example 4

As in Example 2, a package of a rolled multi-layer sheet prepared in Reference Example 3 was opened after 2 months, and the multi-layer sheet was then molded into a tray-like container. The molding state of the obtained tray-like container was extremely good. This tray-like container was used to carry out a storage test of rice with red beans in the same manner as in Example 2. The results are shown in Table 2.

**Table 2**

| | Analytical Results of Oxygen Concentration in Container | | | Flavor* at Cooking in Microwave Oven on 2nd Month of Storage |
|---|---|---|---|---|
| | 7th Day of Storage | 14th Day of Storage | 2nd Month of Storage | |
| Example 2 | 0.8% | 0.1% or less | 0.1% or less | 3 |
| Comp. Ex. 3 | 1.0% | 0.1% or less | 0.1% of less | 2 |
| Comp. Ex. 4 | 1.0% | 0.1% or less | 0.1% of less | 2 |

| | | | | |
|---|---|---|---|---|
| * Evaluation of the flavor: | | | | |
| 3: Good (no odor) | | | | |
| 2: Slightly odorous | | | | |
| 1: Very odorous | | | | |

As is apparent from the storage test of the rice with red beans in Table 2, the molded container of the multi-layer sheet of the present invention in which the active carbon is contained in the deoxidizing resin layer of Example 2 could exert a good flavor holding effect without any emission of odor. On the other hand, in the case of the molded container of the multi-layer sheet of Comparative Example 3 in which no active carbon was contained, the bad odor was emitted. Furthermore, in the case of the molded container of the multi-layer sheet of Comparative Example 4 in which a calcined diatomaceous earth was contained in place of the active carbon, the adsorbing performance of the calcined diatomaceous earth was low, so that an odor component could not be adsorbed.

### Example 3

By the use of an extruding machine comprising a 45 mmφ one direction rotatable twin-screw extruder equipped with vents and a constant feeder, a low-density polyethylene and a deoxidizer in Example 1 were kneaded in a weight ratio of 1:1, and the mixture was then extruded through a strand die, air-cooled and then ground to obtain a master batch F.

A polyester film (12 µm), an aluminum foil (8 µm), a low-density polyethylene (20 µm) were dry-laminated by the use of a tandem laminator equipped with 2 extruders to form an aluminum foil-laminated film as a base film, and on the low-density polyethylene side of this formed film, there were laminated a blend resin comprising 95% by weight of a master batch F and 5% by weight of a master batch C extruded by the first extruder, and a low-density polyethylene containing 10% of titanium oxide extruded by the second extruder, thereby preparing a deoxidizing multi-layer film. This deoxidizing multi-layer film was constituted of a breathing isolate layer (30 µm), a deoxidizing resin layer (70 µm), the low-density polyethylene (20 µm) , the aluminum foil (8 µm) and PET (12 µm) , and the thickness of the film was 140 µm. The film formability of the deoxidizing resin layer by the extruding lamination herein was good, and the deoxidizing multi-layer film having a good appearance could be obtained.

### Reference Example 4

By the use of a tandem laminator in Example 3, a deoxidizing multi-layer film was prepared by the same manner as in Example 3 except that a blend resin comprising 95% by weight of a master batch F, 4% by weight of a master batch B and 1% by weight of a low-density polyethylene was extruded by the first extruder. In this case, the film formability of the deoxidizing resin layer by the extruding was good, and the deoxidizing multi-layer film having a good appearance could be obtained.

### Example 4

A deoxidizing multi-layer film prepared in Example 3 was heat-sealed along three edges, a breathing isolate layer being arranged so as to be an inside layer, thereby forming a bag (15 cm x 30 cm) having deoxidizing properties. Next, 100 g of dried bean curd (water activity = 0.68, water content = 10%) was filled into the prepared bag sealed along the three edges, and the bag was heat-sealed and then stored at 25°C. After the storage for 2 months, the bag was opened to take out the dried bean curd, and its flavor was inspected. During the storage, an acid concentration in the sealed bag was measured every day. The results are shown in Table 3.

### Comparative Example 5

The storage test of a dried bean curd was carried out by the same procedure as in Example 4 except that a deoxidizing multi-layer film prepared in Reference Example 4 was used. The results are shown in Table 3.

**Table 3**

| | Analytical Results of Oxygen Concentration in Container | | | Flavor* at Opening after Storage for 2 Months |
|---|---|---|---|---|
| | 3rd Day of Storage | 10th Day of Storage | 20th Day of Storage | |
| Example 4 | 4.6% | 0.3% | 0.1% or less | 3 |
| Comp. Ex. 5 | 1.0% | 0.4% | 0.1% of less | 1 |

| | | | | |
|---|---|---|---|---|
| * Evaluation of the flavor: | | | | |
| 3: Good (no odor) | | | | |
| 2: Slightly odorous | | | | |
| 1: Very odorous | | | | |

As is apparent from Table 3, in the case that the food was stored in the packaging bag of the deoxidizing multi-layer layer in which any active carbon was not contained in the deoxidizing resin layer of Comparative Example 5, a bad odor was emitted. On the contrary, in the case of the present invention in which the active carbon is contained in the deoxidizing resin layer of Example 4, the bad odor was not emitted, and a good flavor holding effect could be exerted.

## Claims

1. A deoxidizing resin composition in which a deoxidizer which can bring about an oxygen absorbing reaction by its contact with water, an active carbon, and an alkaline earth metal oxide are contained in a thermoplastic resin.

2. The deoxidizing resin composition according to Claim 1 wherein the content of the deoxidizer is in the range of 10 to 80% by weight based on the weight of the deoxidizing resin composition; the content of the active carbon is in the range of 0.1 to 10 parts by weight based on 100 parts by weight of the deoxidizer; and the content of the alkaline earth metal oxide is in the range of 0.1 to 10 parts by weight based on 100 parts by weight of the deoxidizer.

3. A deoxidizing sheet or film comprising a deoxidizing resin composition described in Claim 1.

4. A deoxidizing multi-layer material in which isolate layers are formed on both the surfaces of a deoxidizing resin layer comprising the deoxidizing resin composition described in Claim 1, and at least one of these isolate layers is in a breathing state.

5. A packaging container a part or all of which comprises a deoxidizing multi-layer material described in Claim 4 so as to absorb oxygen in the container.

## Patentansprüche

1. Desoxidierende Harzzusammensetzung, in der ein Desoxidationsmittel, das durch seinen Kontakt mit Wasser eine Sauerstoffaufnahmereaktion bewirken kann, eine Aktivkohle und ein Erdalkalimetalloxid in einem thermoplastischen Harz enthalten sind.

2. Desoxidierende Harzzusammensetzung nach Anspruch 1, wobei der Gehalt des Desoxidationsmittel im Bereich von 10 bis 80 Gewichtsprozent auf Basis des Gewichtes der desoxidierenden Harzzusammensetzung liegt, der Gehalt der Aktivkohle im Bereich von 0,1 bis 10 Gewichtsteilen auf Basis von 100 Gewichtsteilen des Desoxidationsmittels liegt und der Gehalt des Erdalkalimetalloxids im Bereich von 0,1 bis 10 Gewichtsteilen auf Basis von 100 Gewichtsteilen des Desoxidationsmittels liegt.

3. Desoxidierende Folie oder Film, umfassend eine im Anspruch 1 beschriebene, desoxidierende Harzzusammensetzung.

4. Desoxidierendes Mehrfachschichtmaterial, in dem Isolierschichten auf beiden Seiten einer desoxidierenden Harzschicht, welche die in Anspruch 1 beschriebene, desoxidierende Harzzusammensetzung umfasst, ausgebildet sind und wenigstens eine dieser Isolierschichten in einem Atmungszustand ist.

5. Verpackungsbehälter, wobei er insgesamt oder ein Teil von ihm das in Anspruch 4 beschriebene, desoxidierende Mehrfachschichtmaterial umfasst, so dass in dem Behälter Sauerstoff absorbiert wird.

## Revendications

1. Composition de résine désoxydante dans laquelle un désoxydant qui peut conduire à une réaction d'absorption d'oxygène par son contact avec l'eau, un charbon actif, et un oxyde de métal alcalino-terreux sont contenus dans une résine thermoplastique.

2. Composition de résine désoxydante selon la revendication 1, dans laquelle la teneur en le désoxydant est située dans la plage allant de 10 à 80 % en poids par rapport au poids de la composition de résine désoxydante ; la teneur en le charbon actif est située dans la plage allant de 0,1 à 10 parties en poids pour 100 parties en poids du désoxydant ; et la teneur en l'oxyde de métal alcalino-terreux est située dans la plage allant de 0,1 à 10 parties en poids pour 100 parties en poids du désoxydant.

3. Feuille ou film désoxydant comprenant une composition de résine désoxydante décrite dans la revendication 1.

4. Matériau multicouche désoxydant dans lequel des couches isolées sont formées sur les deux surfaces d'une couche de résine désoxydante comprenant la composition de résine désoxydante décrite dans la revendication 1, et au moins l'une de ces couches isolées est dans un état respirant.

5. Récipient d'emballage dont tout ou partie comprend un matériau multicouche désoxydant décrit dans la revendication 4 de façon à absorber l'oxygène dans le récipient.
